# EUROPÄISCHE PATENTSCHRIFT

(11) **EP 3 453 248 B1**
(45) Veröffentlichungstag und Bekanntmachung des Hinweises auf die Patenterteilung: **05.08.2020**
(21) Anmeldenummer: 18174550.6
(22) Anmeldetag: 28.05.2018
(51) Int. Cl.: A01F 12/44

(54) **MÄHDRESCHER**
COMBINE HARVESTER
MOISSONNEUSE-BATTEUSE

(30) Priorität: 07.09.2017 DE 102017120674
(43) Veröffentlichungstag der Anmeldung: 13.03.2019
(73) Patentinhaber: CLAAS Selbstfahrende Erntemaschinen GmbH, 33428 Harsewinkel (DE)
(72) Erfinder: Schwarz, Dr. Michael, 33378 Rheda-Wiedenbrück (DE)
(74) Vertreter: CLAAS Gruppe

(56) Entgegenhaltungen:
- EP-A1- 0 102 116
- DE-A1- 3 324 492

## Beschreibung

Die vorliegende Erfindung betrifft einen Mähdrescher gemäß dem Oberbegriff von Anspruch 1.

Mähdrescher weisen üblicherweise verschiedene der das Entkörnen des Ernteguts vornehmenden Drescheinrichtung nachgeschaltete Einreichungen auf, um die beim Dreschen separierten Erntegutbestandteile zu entmischen. So ist regelmäßig der Drescheinrichtung eine Trenneinrichtung nachgelagert, die aus dem gedroschenen Erntegutstrom den Anteil an freien beweglichen Körnern abscheidet und das übrige Stroh der Häckseleinrichtung des Mähdreschers zuführt. Eine solche Trenneinrichtung kann beispielsweise ein Hordenschüttler oder ein Abscheidesystem mit einem oder zwei in Längsrichtung eingebauten Rotoren sein. Neben der Trenneinrichtung verfügt ein Mähdrescher regelmäßig auch über eine Reinigungseinrichtung, der das in der Drescheinrichtung und/oder der Trenneinrichtung abgeschiedene Korn zugeführt wird. So führen die Körner noch viele Nichtkornbestandteile (Spreu und Strohpartikel) mit, die in der Reinigungseinrichtung vom Korn getrennt werden.

Aus dem Stand der Technik sind eine Vielzahl verschiedener Reinigungseinrichtungen zum Entmischen des Ernteguts und dadurch Trennen des Korns von Nichtkornbestandteilen bekannt. Diese basieren regelmäßig auf einem kombinierten Sieben und Sichten, das heißt, das Reinigungsgut aus Körnern und Nichtkornbestandteilen wird beim Sieben durch einen Luftstrom angeströmt. Das gereinigte Korn wird dann anschließend, beispielsweise mittels eines Kornelevators, in einen Korntank des Mähdreschers geführt.

Aus der DE 28 35 899 C2 ist ein Mähdrescher mit einer Reinigungseinrichtung bekannt, die auf dem Prinzip der rotierenden Reinigung basiert. Hierbei wird das zu entmischende Erntegut statt über im Wesentlichen ebene Siebe in eine rotierbare Siebeinrichtung, auch als Siebrotor bezeichnet, geführt, die einen siebförmigen, also mit einer Sieblochung versehenen, Siebmantel aufweist. Der Siebmantel hat dabei eine Kegelstumpf- bzw. Konusform, wobei das Ende mit dem kleineren Querschnitt dem Dreschteil der hier kombinierten Dresch- und Trenneinrichtung zugekehrt ist, so dass sich die Siebeinrichtung in Strömungsrichtung des Ernteguts erweitert. Während das zu entmischende Erntegut durch die konische Siebeinrichtung geführt wird, rotiert diese um eine in Fahrtrichtung des Mähdreschers und somit orthogonal zur Schwerkraftrichtung verlaufende Drehachse. Gleichzeitig führt die Reinigungseinrichtung eine Oszillationsbewegung parallel zur Drehachse aus.

Das aus dem Stand der Technik bekannte Prinzip der rotierenden Reinigung bewirkt einen verbesserten Reinigungseffekt gegenüber dem Prinzip der ebenen Reinigung, da hierbei neben der Wirkung der Schwerkraft auch die Wirkung von Fliehkräften zur Entmischung von Korn- und Nichtkornbestandteilen genutzt wird. Gleichwohl sind aber auch bei dem zuvor beschriebenen Prinzip der rotierenden Reinigung die Reinigungseffekte beschränkt und die Leistungsfähigkeit des Mähdreschers dadurch begrenzt. Weiter ist aus der DE 33 24 492 A1 eine in einem Mähdrescher positionierte rotierende Reinigungseinrichtung beschrieben, deren Siebelement um eine aufrechtstehende Achse rotiert und zugleich eine horizontale Bewegung ausführt. Das durchgängig zylindrisch gestaltete Siebelement hat den Nachteil, dass die auf das Erntegut wirkende Fliehkraft stets gleich ist, was bei einer abnehmenden Konzentration an Körnern in der Gutmatte zu einer Abnahme des Abscheideffekts führt.

Der Erfindung liegt das Problem zugrunde, einen Mähdrescher bereitzustellen, der einen optimierten Reinigungseffekt des gedroschenen Ernteguts gewährleistet.

Das obige Problem wird bei einem Mähdrescher gemäß dem Oberbegriff von Anspruch 1 durch die Merkmale des kennzeichnenden Teils von Anspruch 1 gelöst.

Der vorschlagsgemäße Mähdrescher weist eine Einzugsanordnung zum Aufnehmen von Erntegut aus einem Feldbestand auf, mit der das Erntegut einer nachgelagerten Drescheinrichtung, insbesondere über einen Schrägförderer, zugeführt werden kann. In der Drescheinrichtung wird das Erntegut gedroschen und dadurch entkörnt. Auf diese Weise wird ein erster, überwiegend Korn enthaltender Erntegutanteil und ein zweiter, überwiegend Stroh enthaltender Erntegutanteil erzeugt. Der überwiegend Stroh enthaltende Erntegutanteil wird dann vorzugsweise einer nachgelagerten Trenneinrichtung zugeführt, die beispielsweise einen Schüttler, insbesondere Hordenschüttler, oder mindestens einen Abscheiderotor, insbesondere Axialrotor, aufweist, um frei bewegliche Körner vom Strohanteil abzuscheiden, wobei ein dritter, ebenfalls überwiegend Korn enthaltender Erntegutanteil erzeugt wird.

Mindestens einer der, vorzugsweise beide, überwiegend Korn enthaltende Erntegutanteile wird bzw. werden dann einer nachgelagerten Reinigungseinrichtung zugeführt, die das Korn von mitgeführten Nichtkornbestandteilen trennt. Dies erfolgt durch ein hier und vorzugsweise kombiniertes Sieben und Sichten des Ernteguts in einer rotierbaren Siebeinrichtung mit einem zumindest abschnittsweise siebförmigen Siebmantel, der sich in einer Umfangsrichtung um die Drehachse erstreckt.

Wesentlich bei dem vorschlagsgemäßen Mähdrescher ist nun, dass die Entmischung mittels der rotierbaren Siebeinrichtung durch Überlagerung einer Drehbewegung und Oszillationsbewegung des Siebmantels erfolgt, und zwar derart, dass die Oszillationsbewegung quer zur Drehachse der Siebeinrichtung gerichtet ist bzw. eingeleitet wird. Mit einer Oszillationsbewegung ist eine hin- und hergehende Bewegung des Siebmantels gemeint, wobei sich der Siebmantel dabei aber nicht zwingend als Ganzes in ein und dieselbe Richtung hin- und herbewegen muss, sondern sich vorzugsweise mehrere Abschnitte des Siebmantels jeweils quer zur Drehachse hin- und herbewegen. Bei letzterer Oszillationsbewegung bewegen sich die Abschnitte des Siebmantels zumindest auf einem Abschnitt ihrer Bewegung oszillierend auf die Drehachse zu und von dieser weg, wobei sich die Abschnitte des Siebmantels dabei insbesondere, zumindest überwiegend, innerhalb der äußeren radialen Begrenzung des Siebmantels hin- und herbewegen. Zusätzlich zu der Oszillationsbewegung des Siebmantels dreht sich dieser um die Drehachse.

Auf diese Weise wirken auf das zu entmischende Erntegut zusätzlich zur Schwerkraft sowohl Fliehkräfte als auch auf die Drehachse gerichtete Beschleunigungskräfte, das heißt in Richtung des Innern des Siebmantels und damit entgegen den Fliehkräften gerichtete Beschleunigungskräfte. Die Fliehkräfte wirken dabei insbesondere kontinuierlich, da die Siebeinrichtung insbesondere kontinuierlich rotiert. Durch die Oszillationsbewegung quer zur Drehachse wird dabei das Erntegut im Takt der Oszillationsbewegung kurzen Impulsen entgegen der Fliehkraftrichtung ausgesetzt, was zu einer Optimierung des Entmischungsvorgangs führt. So werden durch die oszillationsbedingten Impulse die Körner weiter ins Innere der Siebeinrichtung geschleudert als die leichteren Nichtkornbestandteile, wobei die Nichtkornbestandteile dann von einem auf das zu entmischende Erntegut gerichteten Luftstrom aus der Siebeinrichtung herausgeleitet werden, wohingegen die Körner aufgrund ihres vergleichsweise hohen Gewichts trotz der Luftströmung zunächst wieder in Schwerkraftrichtung fallen und dann durch die Fliehkräfte im von den Nichtkornbestandteilen getrennten bzw. gereinigten Zustand durch die Sieblochung des Siebmantels radial aus der Siebeinrichtung herausgetragen werden. Die Reinigungseffektivität kann durch das vorschlagsgemäße Überlagern der Drehbewegung und Oszillationsbewegung des Siebmantels erheblich verbessert werden.

Die Ansprüche 2 und 3 definieren bevorzugte Orientierungen der Oszillationsbewegung zur Drehachse der rotierbaren Siebeinrichtung sowie bevorzugte Orientierungen der Drehachse zur Schwerkraftrichtung.

Anspruch 4 definiert verschiedene Varianten der Oszillationsbewegung des Siebmantels. So ist es bevorzugt, wenn die radiale Position der Drehachse bei der Oszillationsbewegung relativ zur Drescheinrichtung fest ist, die Drehachse also die Oszillationsbewegung nicht mit ausführt. In diesem Fall oszillieren dann vorzugsweise einzelne über den Umfang des Siebmantels verteilte Umfangssegmente des Siebmantels, wobei die einzelnen Oszillationsbewegungen quer zur Drehachse zusammen die Oszillationsbewegung des Siebmantels insgesamt bilden (Anspruch 5). Grundsätzlich ist es aber auch denkbar, dass sich die radiale Position der Drehachse entsprechend der Oszillationsbewegung ändert, das heißt, die Drehachse wird bei der Oszillationsbewegung mitbewegt. Besonders bevorzugt ist dabei die axiale Position der Siebeinrichtung fest, das heißt, die Oszillationsbewegung bewirkt keine axiale Bewegung der Siebeinrichtung als Ganzes.

Nach der bevorzugten Ausgestaltung gemäß Anspruch 6 sind die Oszillationsbewegungen der beschriebenen Umfangssegmente des Siebmantels, die insbesondere gleichmäßig über den Umfang des Siebmantels verteilt sein können, synchron ausführbar, das heißt alle Umfangssegmente sind zur selben Zeit in ihrer radial äußeren Stellung bzw. zur selben Zeit in ihrer radial inneren Stellung. Vorzugsweise sind die Umfangssegmente gelenkig miteinander verbunden.

Nach der Ausgestaltung gemäß Anspruch 7 sind die Umfangssegmente jeweils um eine dem jeweiligen Umfangssegment zugeordnete Schwenkachse schwenkbar. Dabei liegen die jeweilige Schwenkachse und die Drehachse vorzugsweise in einer gemeinsamen Ebene, wobei es aber auch denkbar ist, dass die jeweilige Schwenkachse und die Drehachse in zueinander orthogonalen oder zueinander geneigten Ebenen liegen.

Anspruch 8 definiert eine bevorzugte Ausgestaltung, nach der die Umfangssegmente einzeln austauschbar und/oder einstellbar sein können. Auf diese Weise lassen sich die Umfangssegmente optimal an die jeweilige Erntegutart anpassen.

Die Ansprüche 9 und 10 definieren besonders bevorzugte Formen des Siebmantels bzw. der den Siebmantel und gegebenenfalls einen Boden umfassenden Siebeinrichtung. Erfindungsgemäß ist der Siebmantel konusförmig, kegelstumpfförmig, pyramidenförmig oder pyramidenstumpfförmig, hat also insbesondere eine schräg verlaufende Wand, wobei sich der Siebmantel zu seinem unteren Ende hin verjüngt. Am unteren Ende weist die Siebeinrichtung insbesondere einen Boden auf, wohingegen das in axialer Richtung entgegengesetzte Ende nicht verschlossen ist. Besonders bevorzugt wird das zu entmischende Erntegut vom oberen in Richtung des unteren Endes, also in Richtung der Verjüngung des Siebmantels, in die Siebeinrichtung eingeleitet. Insbesondere werden die Nichtkornbestandteile in entgegengesetzter Richtung, also in Richtung von dem unteren zum oberen Ende, aus der Siebeinrichtung ausgeleitet. Der Siebmantel muss aber nicht zwingend eine schräg verlaufende Wand haben, sondern kann auch abschnittsweise 2. eine zylindrische Wand haben. Grundsätzlich ist es auch denkbar, dass der Siebmantel einen konusförmigen oder kegelstumpfförmigen Abschnitt und einen axial daran anschließenden zylindrischen Abschnitt aufweist.

Gemäß Anspruch 11 kann die Reinigungseinrichtung eine Zuführeinrichtung zum Zuführen des Ernteguts ins Innere der Siebeinrichtung und/oder ein Gebläse zum Erzeugen eines Luftstroms durch die Siebeinrichtung aufweisen. Mit der Zuführeinrichtung wird das noch zu entmischende Erntegut insbesondere erst im bodennahen Bereich der Siebeinrichtung aus der Zuführeinrichtung in die Siebeinrichtung geleitet. Das Gebläse kann dann insbesondere einen Luftstrom in entgegengesetzter Richtung erzeugen, das heißt vom unteren zum oberen Ende des Siebmantels bzw. der Siebeinrichtung, wodurch insbesondere die Nichtkornbestandteile aus der Siebeinrichtung abgeleitet werden können.

Nach der Ausgestaltung gemäß Anspruch 12 weist die Reinigungseinrichtung im Innern der Siebeinrichtung eine insbesondere rotierende Umlenkeinrichtung auf, die das insbesondere über die Zuführeinrichtung in die Siebeinrichtung eingeleitete, zu entmischende Erntegut in radialer Richtung umlenkt und beschleunigt. Die Umlenkeinrichtung ist insbesondere im Bereich des Bodens der Siebeinrichtung angeordnet und umfasst beispielsweise einen Wurfteller oder einen randseitig gekröpften Beschleunigungsteller.

Anspruch 13 definiert einen bevorzugten Verlauf der Strömung bzw. der Teilströmungen des Ernteguts während des Entmischungsvorgangs in der Reinigungseinrichtung.

Die Ansprüche 14 und 15 definieren bevorzugte geometrische und mechanische Parameter des Siebmantels und insbesondere seiner Umfangssegmente.

Anspruch 16 definiert bevorzugte kinematische Parameterbereiche der Siebeinrichtung während des bestimmungsgemäßen Betriebs, insbesondere bei einem Erntevorgang, die von einer Steuereinrichtung der Reinigungseinrichtung eingestellt werden können.

Im Folgenden wird die Erfindung anhand einer lediglich Ausführungsbeispiele darstellenden Zeichnung näher erläutert. In der Zeichnung zeigt
- Fig. 1: eine schematische Seitenansicht eines vorschlagsgemäßen Mähdreschers,
- Fig. 2: eine schematische Darstellung einer Reinigungseinrichtung des Mähdreschers aus Fig. 1 und
- Fig. 3: eine schematische Darstellung der Funktionsweise der Reinigungseinrichtung aus Fig. 2 anhand verschiedener Ausführungsbeispiele.

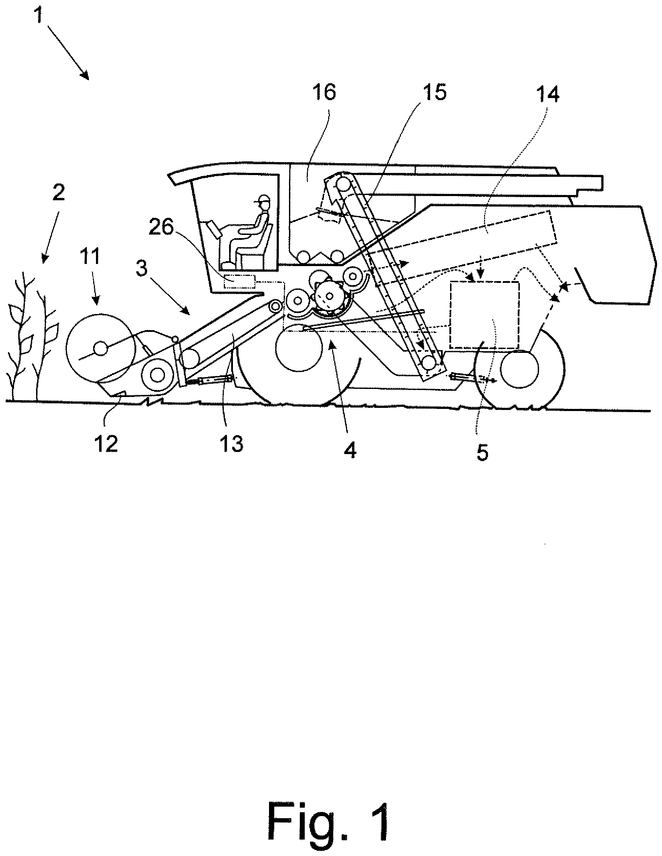

Der in Fig. 1 dargestellte vorschlagsgemäße Mähdrescher 1 ist zur Verarbeitung von aus einem Feldbestand 2 aufgenommenem Erntegut eingerichtet und umfasst eine Einzugsanordnung 3 zum Aufnehmen des Ernteguts, eine Drescheinrichtung 4 zum Entkörnen des aufgenommenen Ernteguts, wodurch ein erster, überwiegend Korn enthaltender Erntegutanteil und ein zweiter, überwiegend Stroh enthaltender Erntegutanteil erzeugt wird, sowie eine Reinigungseinrichtung 5 zum Entmischen des Ernteguts, nachdem dieses die Drescheinrichtung 4 passiert hat, wodurch das Korn aus dem Erntegut von Nichtkornbestandteilen getrennt wird. Der Reinigungsprozess erfolgt durch ein hier und vorzugsweise kombiniertes Sieben und Sichten des Ernteguts in einer um eine Drehachse 6 rotierenden Siebeinrichtung 7, die einen zumindest abschnittsweise siebförmigen Siebmantel 8 aufweist, der sich in einer Umfangsrichtung um die Drehachse 6 erstreckt.

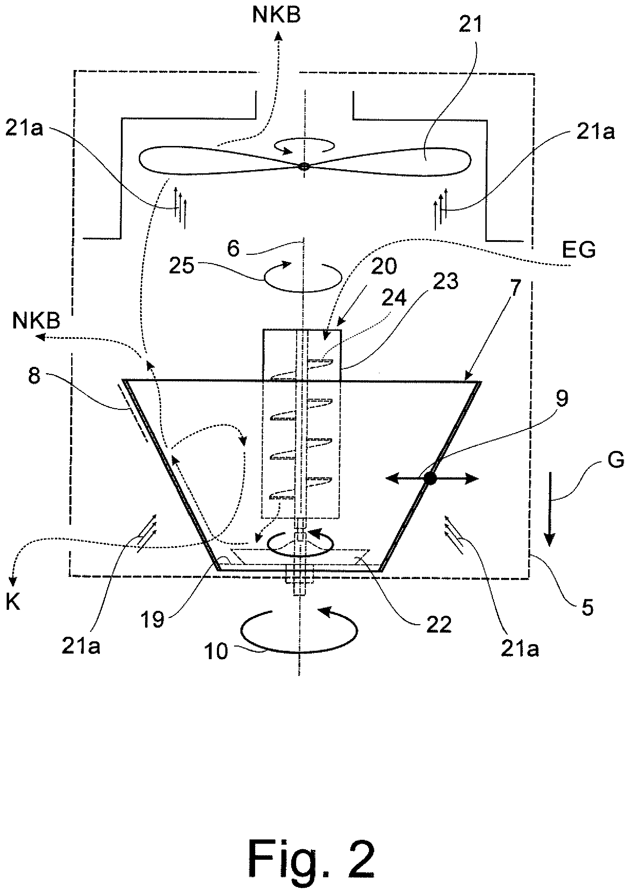

Der vorschlagsgemäße Mähdrescher 1 ist nun dadurch gekennzeichnet, dass die Entmischung bzw. Reinigung durch Überlagerung einer Drehbewegung und Oszillationsbewegung des Siebmantels 8 erfolgt, wobei die Oszillationsbewegung des Siebmantels 8 quer zur Drehachse 6 der Siebeinrichtung 7 gerichtet ist. Die Oszillationsbewegung des Siebmantels 8 ist in Fig. 2 schematisch durch einen Doppelpfeil 9 und die Drehbewegung des Siebmantels 8 durch einen gebogenen, im Uhrzeigersinn verlaufenden Pfeil 10 dargestellt. Eine Überlagerung der Drehbewegung und der quer zur Drehachse 6 gerichteten Oszillationsbewegung des Siebmantels 8 verbessert den Reinigungseffekt der Reinigungseinrichtung 5, da das Entmischen von Korn und Nichtkornbestandteilen gegenüber dem Stand der Technik optimiert wird. So wird das zu entmischende Erntegut in der Siebeinrichtung 7 nicht nur der Schwerkraft G und einer rotationsbedingten Fliehkraft ausgesetzt, sondern auch einer oszillationsbedingten Kraft, die wiederholt radial nach innen und somit entgegen der Fliehkraft wirkt. Die Kombination aus den verschiedenen, auf das Erntegut einwirkenden Kräften führt zu einer besseren und schnelleren Separierung von Korn und Nichtkornbestandteilen und erhöht dadurch auch den Korndurchsatz der Reinigungseinrichtung 5.

Bei der Einzugsanordnung 3 kann es sich um eine Vorsatzanordnung 11 handeln, welche wie in Fig. 1 dargestellt ein Schneidwerk 12 umfassend eine Haspel, einen Messerbalken und eine Einzugsschnecke sowie einen Schrägförderer 13 aufweist, wobei der Schrägförderer 13 das abgeschnittene und eingezogene Erntegut als Erntegutstrom zur weiteren Verarbeitung im Mähdrescher 1 zur Drescheinrichtung 4 fördert. Die Drescheinrichtung 4, welche üblicherweise eine Dreschtrommel und einen Dreschkorb umfasst und hier eine zur Fahrtrichtung orthogonale Antriebsachse aufweist, grundsätzlich aber auch axial bzw. in Fahrtrichtung ausgerichtet sein kann, trennt das Korn vom Stroh im Erntegut, wobei der entsprechende überwiegend Korn enthaltende Erntegutanteil von der Drescheinrichtung 4 unmittelbar der nachgelagerten Reinigungseinrichtung 5 zugeführt wird, wohingegen der entsprechende überwiegend Stroh enthaltende Erntegutanteil hier und vorzugsweise noch einer Trenneinrichtung 14 zugeführt wird, die, beispielsweise über einen Hordenschüttler oder einen Axialrotor, freie bewegliche Körner aus dem überwiegend Stroh enthaltenden Erntegutanteil abscheidet. Das übrigbleibende Stroh wird dann am rückwärtigen Ende des Mähdreschers 1 ausgeworfen. Der in der Trenneinrichtung 14 erzeugte, weitere überwiegend Korn enthaltende Erntegutanteil wird dann ebenfalls der Reinigungseinrichtung 5 zugeführt und zusammen mit dem unmittelbar von der Drescheinrichtung 4 zugeführten, überwiegend Korn enthaltenden Erntegutanteil in die rotierende Siebeinrichtung 7 geleitet.

Nach dem erfolgten Entmischen des Ernteguts in der Reinigungseinrichtung 5 werden die Nichtkornbestandteile ebenfalls am rückwärtigen Ende des Mähdreschers 1 ausgeworfen, wohingegen das gereinigte Korn über einen Kornelevator 15 einem Korntank 16 des Mähdreschers 1 zugeführt wird.

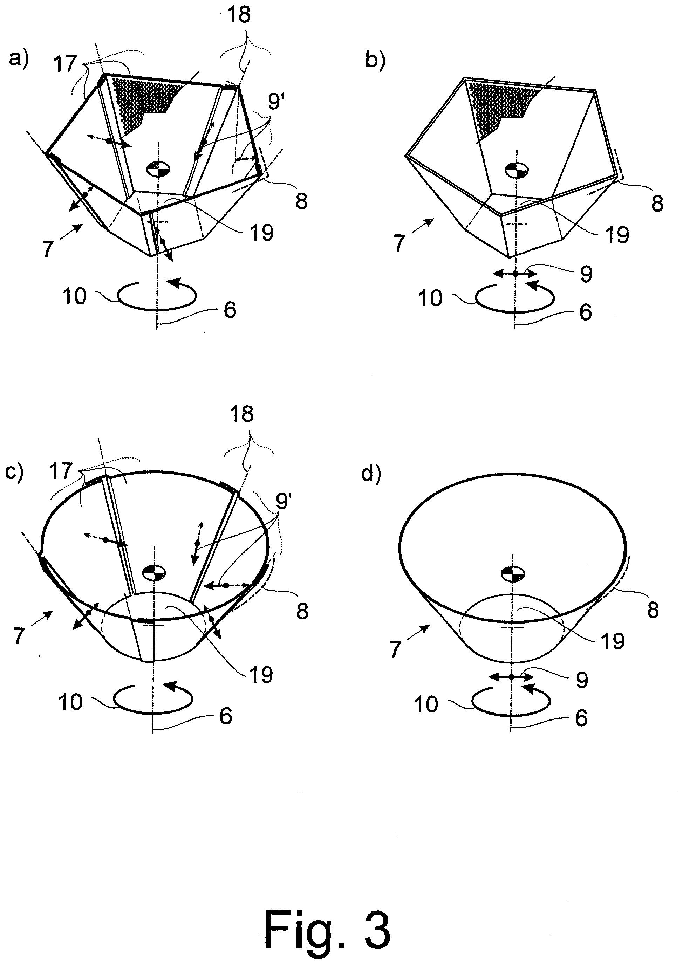

Es sind nun verschiedene Möglichkeiten einer Oszillationsbewegung denkbar. So ist es bevorzugt, wenn sich bei der Oszillationsbewegung des Siebmantels 8 die radiale Position der Drehachse 6 relativ zur Drescheinrichtung 4 nicht verändert, die Drehachse 6 sich also nicht oszillierend mitbewegt. In diesem Fall, der auch in den Fig. 3a und 3c schematisch dargestellt ist, weist der Siebmantel 8 über seinen Umfang verteilt mehrere Umfangssegmente 17 auf, von denen jedes einzelne eine Oszillationsbewegung quer zur Drehachse 6 zwischen einer radial äußeren Stellung und einer radial inneren Stellung ausführt, hier dargestellt durch die Doppelpfeile 9'. Die Umfangssegmente 17 können erntegutabhängig austauschbar und/oder einstellbar sein, was den zusätzlichen Vorteil hat, dass bei einem Defekt in einem Abschnitt des Umfangs des Siebmantels 8 nicht der gesamte Siebmantel 8, sondern lediglich ein Umfangssegment 17 ausgetauscht werden muss. Die Summe der Oszillationsbewegungen der einzelnen Umfangssegmente 17 (Doppelpfeile 9') ergibt dann die Oszillationsbewegung des Siebmantels 8 insgesamt (Doppelpfeil 9). Grundsätzlich ist es aber auch denkbar, dass sich die radiale Position der Drehachse 6 der Oszillationsbewegung entsprechend ändert, sich also die Drehachse 6 oszillierend mitbewegt, wobei insbesondere die Oszillationsbewegung der Drehachse 6 allein die Oszillationsbewegung des Siebmantels 8 hervorruft. Letzteres ist in den Fig. 3b und 3d schematisch dargestellt, wobei hier der Siebmantel 8 keine bewegbaren Umfangssegmente 17 aufweist. Grundsätzlich ist es aber auch denkbar, zusätzlich zu einer in Querrichtung oszillierenden Drehachse 6 oszillierende Umfangssegmente 17 vorzusehen.

Die Oszillationsbewegung des Siebmantels 8 erfolgt bevorzugt ausschließlich quer zur Drehachse 6, wobei sich die axiale Position der Siebeinrichtung 7 und/oder des Siebmantels 8 nicht ändert. Letzteres schließt, insbesondere bei einem im Wesentlichen konusförmigen, kegelstumpfförmigen, pyramidenförmigen oder pyramidenstumpfförmigen Siebmantel 8, nicht aus, dass sich die Umfangssegmente 17 bei ihrer Oszillationsbewegung zumindest abschnittsweise auch in eine Richtung mit einem axialen Anteil bewegen. Der die Umfangssegmente 17 haltende Rahmen des Siebmantels 8 bzw. der Siebeinrichtung 7 und die axiale Lagerung des Siebmantels 8 bzw. der Siebeinrichtung 7 sind dann aber dennoch ortsfest.

Mit einer Oszillationsbewegung "quer" zur Drehachse 6 kann sowohl eine Oszillationsbewegung orthogonal zur Drehachse 6 als auch eine Oszillationsbewegung in einem Winkel von ungleich 90° zur Drehachse 6 gemeint sein. In letzterem Fall, also bei einer zur Drehachse 6 schräg verlaufenden Oszillationsbewegung, verläuft diese insbesondere in einem Winkel im Bereich von 50 bis 80°, bevorzugt in einem Winkel im Bereich von 55 bis 70°, besonders bevorzugt in einem Winkel im Bereich von 60 bis 65°, zur Drehachse 6.

Die Drehachse 6 der Siebeinrichtung 7 verläuft, wie Fig. 2 beispielhaft zeigt, in Schwerkraftrichtung G. Grundsätzlich ist es aber auch denkbar, die Drehachse 6 zur Schwerkraftrichtung G geneigt anzuordnen. Insbesondere verläuft die Drehachse 6 dann in einem Winkel im Bereich von 30 bis 60°, bevorzugt in einem Winkel im Bereich von 35 bis 55°, besonders bevorzugt in einem Winkel im Bereich von 40 bis 50°, beispielsweise in einem Winkel von 45°, zur Schwerkraftrichtung G.

Die Oszillationsbewegungen der Umfangssegmente 17 verlaufen insbesondere synchron, wobei die Synchronität zusätzlich noch dadurch unterstützt werden kann, dass die Umfangssegmente 17 gelenkig miteinander verbunden sind. Insbesondere sind jeweils benachbarte Umfangssegmente 17 unmittelbar miteinander verbunden. Grundsätzlich ist es denkbar, eine gemeinsame Auslenkeinrichtung vorzusehen, die alle Umfangssegmente 17 vorzugsweise gleichzeitig bewegt und die insbesondere einen von der Drehbewegung der Siebeinrichtung 7 um die Drehachse 6 unabhängig oszillierenden Auslenkantrieb sowie Verbindungsmittel umfasst, die den Auslenkantrieb gelenkig mit den Umfangssegmenten 17 verbinden. Grundsätzlich kann die Auslenkeinrichtung auch einen Phasenversatz bewirken oder eine andere Mittelstellung als der Siebmantel 8 haben, wodurch die Umfangssegmente 17 auch zu verschiedenen Zeitpunkten bewegt werden könnten. Die Umfangssegmente 17 sind besonders bevorzugt jeweils um eine dem jeweiligen Umfangssegment 17 zugeordnete Schwenkachse 18 schwenkbar gelagert. Grundsätzlich wäre es aber auch denkbar, die Umfangssegmente 17 translatorisch in Richtung der Drehachse 6 hin- und herzubewegen, wobei es sich in diesem Fall dann nicht um eine Klappbewegung, sondern um eine Parallelverschiebung der Umfangssegmente 17 handeln würde. Auch eine Kombination beider Bewegungsarten wäre denkbar. Eine reine Schwenkbewegung ist aber bevorzugt. Bei den in den Fig. 2 und 3 dargestellten Ausführungsbeispielen verlaufen die jeweiligen Schwenkachsen 18 aller Umfangssegmente 17 und die Drehachse 6 jeweils in einer gemeinsamen Ebene. Grundsätzlich wäre es aber auch denkbar, die Schwenkachsen 18 und die Drehachse 6 jeweils in zueinander orthogonalen oder zueinander geneigten Ebenen anzuordnen.

Wie die Fig. 2 sowie die Fig. 3a-d zeigen, ist der Siebmantel 8 zumindest abschnittsweise, hier und vorzugsweise vollständig, im Wesentlichen konusförmig, kegelstumpfförmig, pyramidenförmig oder pyramidenstumpfförmig ausgebildet, wobei sich der Siebmantel 8 von seinem oberen Ende zu seinem unteren Ende, an dem ein Boden 19 vorgesehen sein kann, verjüngt. Grundsätzlich kann der Siebmantel 8 aber auch abschnittsweise oder vollständig im Wesentlichen zylindrisch ausgebildet sein. "Im Wesentlichen" meint, dass die radial äußere und/oder innere Oberfläche des Siebmantels 8 auch geringfügige Abweichungen von einem rein konusförmigen, kegelstumpfförmigen, pyramidenförmigen oder pyramidenstumpfförmigen Oberflächenverlauf aufweisen kann, die wie die Fig. 3a und 3c zeigen insbesondere durch Überlappungen der Umfangssegmente 17 bedingt sind. So können gemäß einer besonders bevorzugten Ausgestaltung die Umfangssegmente 17 in ihrer radial äußeren Stellung einander in Umfangsrichtung überlappen. Eine Überlappung hat zum einen den Vorteil einer Reduzierung von Spaltverlusten, das heißt, dass das Erntegut und insbesondere die Nichtkornbestandteile nicht ohne Weiteres aufgrund der Zentrifugalkraft durch den entstehenden Spalt zwischen jeweils benachbarten Umfangssegmenten 17 aus der Siebeinrichtung 7 entweichen können. Des Weiteren gewährleistet eine Überlappung, dass keine Totzonen (nur Rotationsbewegung des Siebmantels 8 ohne zur Drehachse 6 gerichteten Bewegungsanteil) entstehen, die eine Auflockerung der Gutmatte an dieser Stelle verhindern würden. Ein weiterer Punkt ist, dass in einer solchen Totzone der Schlupf zwischen Erntegut und Siebmantel 8 nicht variiert würde, das heißt Bewegungstrajektorien der Körner würden kürzer sein, die Verweilzeit in der Siebeinrichtung 7 ebenfalls. Das vorschlagsgemäße Vorsehen einer Überlappung führt also zu einer verbesserten Reinigungsleistung.

Bei Vergleich der Fig. 3a und 3b einerseits mit den Fig. 3c und 3d andererseits ist außerdem erkennbar, dass auch die Form bzw. Kontur des Umfangs verschieden ausgestaltet sein kann. So ist in den Fig. 3a und 3b eine eckige, hier und vorzugsweise fünfeckige, Umfangskontur und in den Fig. 3c und 3d eine kreisförmige Umfangskontur vorgesehen. Der Siebmantel 8 hat dabei entweder dauerhaft die beschriebene Form, beispielsweise Konusform oder Zylinderform, oder zumindest in dem Zustand, in welchem seine Umfangssegmente 17 in ihrer radial äußeren Stellung sind. Dabei verläuft insbesondere die innere Oberfläche des Siebmantels 8 und/oder die innere Oberfläche der Umfangssegmente 17 in ihrer radial äußeren Stellung zur Drehachse 6 geneigt, insbesondere bei einer Konus-, Kegelstumpf-, Pyramiden- oder Pyramidenstumpfform, oder parallel zur Drehachse 6, insbesondere bei einer Zylinderform. Entsprechendes gilt auch für die jeweiligen Schwenkachsen 18 der Umfangssegmente 17, die auch zur Drehachse 6 geneigt verlaufen können, insbesondere bei einer Konus-, Kegelstumpf-, Pyramiden- oder Pyramidenstumpfform, oder parallel zur Drehachse 6 verlaufen können, insbesondere bei einer Zylinderform.

Die Umfangssegmente 17 können, wie Fig. 3a zeigt, eine ebene innere und/oder äußere Oberfläche haben oder, wie Fig. 3c zeigt, eine gebogene innere und/oder äußere Oberfläche haben. Die Umfangssegmente 17 sind dann abhängig von der Form des Siebmantels 8 insbesondere im Wesentlichen trapezförmig (Fig. 3a und 3c). Besonders bevorzugt sind die Umfangssegmente 17 gleichmäßig über den Umfang verteilt und bilden insbesondere einen drehsymmetrischen Siebmantel 8, gemäß den Fig. 3a und 3c beispielsweise einen fünfzählig drehsymmetrischen Siebmantel 8.

In der Fig. 2 ist außerdem noch eine Zuführeinrichtung 20 zum Zuführen des Ernteguts ins Innere der Siebeinrichtung 7 sowie ein Gebläse 21, hier und vorzugsweise ein Sauggebläse, zum Erzeugen eines hier und vorzugsweise von schräg unten durch die Siebeinrichtung 7 nach oben verlaufenden Luftstroms 21a dargestellt. Ferner ist eine hier und vorzugsweise rotierende Umlenkeinrichtung 22 zum Umlenken und Beschleunigen des mittels der Zuführeinrichtung 20 in die Siebeinrichtung 7 eingeleiteten Ernteguts in radialer Richtung dargestellt.

Die Zuführeinrichtung 20 weist hier und vorzugsweise einen Förderkanal 23 auf, der sich hier in axialer Richtung erstreckt. Im Innern des Förderkanals 23 ist eine Förderschnecke 24 angeordnet, die sich hier beispielhaft entgegen der Drehbewegung des Siebmantels 8 bzw. der Siebeinrichtung 7 dreht, aber auch in dieselbe Richtung drehen kann. Die Drehbewegung der Förderschnecke 24 ist hier durch einen gebogenen, gegen den Uhrzeigersinn verlaufenden Pfeil 25 dargestellt. Die Förderschnecke 24 fördert das zu entmischende Erntegut in axialer Richtung vom oberen Ende der Siebeinrichtung 7 in Richtung des unteren Endes der Siebeinrichtung 7.

Am unteren Ende des Förderkanals 23 tritt das Erntegut dann in die rotierende Siebeinrichtung 7 aus, wobei das Erntegut hier zunächst auf die rotierende Umlenkeinrichtung 22 trifft. Die Umlenkeinrichtung 22 kann ein Wurfteller sein, der beispielsweise oberseitig Stege aufweist, oder ein randseitig gekröpfter Beschleunigungsteller. Grundsätzlich ist es aber auch denkbar, die Umlenkeinrichtung 22 als ebene Prallplatte auszubilden oder den Boden 19 der Siebeinrichtung 7 als Umlenkeinrichtung 22 vorzusehen. Die Umlenkeinrichtung 22 dreht hier und vorzugsweise in dieselbe Richtung wie der Siebmantel 8, um zu verhindern, dass das Erntegut abgebremst wird, sobald es auf den Siebmantel 8 prallt.

Von der Umlenkeinrichtung 22 wird das Erntegut fliehkraftbedingt radial nach außen gegen den Siebmantel 8 gedrückt und wird dort durch die Oszillationsbewegung vorzugsweise der Umfangssegmente 17 insbesondere regelmäßig in Richtung der Drehachse 6 geschleudert. Durch diese impulsartige Bewegung des Ernteguts vom Siebmantel 8 in Richtung der Drehachse 6 wird das Korn von den Nichtkornbestandteilen getrennt, da die Körner ein höheres Gewicht als die Nichtkornbestandteile haben. Der von dem Gebläse 21 erzeugte Luftstrom trägt dann die Nichtkornbestandteile nach oben aus der Siebeinrichtung 7 heraus, wohingegen die Körner in Schwerkraftrichtung G wieder zum Boden 19 fallen. Von hier gelangen die Körner dann fliehkraftbedingt und von den Nichtkornbestandteilen befreit durch die Sieblochung im Siebmantel 8 radial nach außen und, wie zuvor beschrieben, hier und vorzugsweise weiter zum Kornelevator 15.

Mit anderen Worten sind hier und vorzugsweise die Zuführeinrichtung 20, das Gebläse 21 und die Umlenkeinrichtung 22 derart zur Siebeinrichtung 7 ausgerichtet, dass das Erntegut zunächst axial in Richtung des unteren Endes bzw. Bodens 19 der Siebeinrichtung 7 eingeleitet wird, dann im Bereich des unteren Endes bzw. Bodens 19 radial nach außen umgelenkt und beschleunigt wird. Zumindest ein Teil des Ernteguts wird dann axial und/oder parallel zur inneren Oberfläche des Siebmantels 8 vom unteren Ende bzw. dem Boden 19 weggeleitet, wozu ein gewisser Schlupf zwischen der Innenoberfläche des Siebmantels 8 und der Gutmatte gewährleistet sein muss. Insbesondere erlaubt dies ein "Hochwandern" der Gutmatte an der Innenoberfläche des Siebmantels 8, wodurch die Körner, wenn diese durch die Oszillationsbewegung ins Innere der Siebeinrichtung 7 geschleudert werden, unterschiedliche Fallhöhen bzw Fallstufen haben. Schließlich gelangt das Korn durch den Siebmantel 8 radial nach außen und die Nichtkornbestandteile werden am oberen, vom Boden abgewandten Ende aus der Siebeinrichtung 7, überwiegend in axialer Richtung, gegebenenfalls auch zu einem geringeren Teil in radialer Richtung, abgeleitet. Zur Veranschaulichung der Materialströme sind in Fig. 2 das in die Siebeinrichtung 7 eingeleitete Erntegut mit EG, das gereinigte Korn mit K und die abgetrennten Nichtkornbestandteile mit NKB bezeichnet.

Der Siebmantel 8 kann beispielhaft eine axiale Erstreckung, die hier die Höhe definiert, im Bereich von 0,70 bis 1,30 m, bevorzugt im Bereich von 0,80 bis 1,20 m, besonders bevorzugt im Bereich von 0,90 bis 1,10 m, haben. Der maximale Innendurchmesser des Siebmantels 8 am unteren Ende der Siebeinrichtung 7 liegt beispielsweise im Bereich von 0,50 bis 1,10 m, bevorzugt im Bereich von 0,60 bis 1,00 m, besonders bevorzugt im Bereich von 0,70 bis 0,90 m. Am oberen Ende kann der maximale Innendurchmesser des Siebmantels 8 im Bereich von 1,40 bis 2,00 m, bevorzugt im Bereich von 1,50 bis 1,90 m, besonders bevorzugt im Bereich von 1,60 bis 1,80 m, liegen. Mit dem maximalen Innendurchmesser ist bei einem eckigen oder unrunden Siebmantel 8 die größte orthogonal zur Drehachse 6 und durch die Drehachse 6 verlaufende Erstreckung gemeint.

Der Schwenkwinkel der Umfangssegmente 17 bei ihrer Oszillationsbewegung kann im Bereich von 1 bis 15°, bevorzugt im Bereich von 1 bis 10°, besonders bevorzugt im Bereich von 3 bis 6°, liegen. Der Schwenkweg des schwenkachsenfernen Endes des Umfangssegments 17, also desjenigen Abschnitts des Umfangssegments 17, das den größten Weg bei der Oszillationsbewegung zurücklegt, liegt beispielsweise im Bereich von 10 bis 200 mm, bevorzugt im Bereich von 30 bis 150 mm, besonders bevorzugt im Bereich von 40 bis 140 mm.

Insbesondere über eine Steuereinrichtung 26 des vorschlagsgemäßen Mähdreschers 1 lassen sich die folgenden, besonders bevorzugten kinematischen Parameterbereiche der Reinigungseinrichtung 5 bzw. Siebeinrichtung 7 einstellen. Im bestimmungsgemäßen Betrieb der Reinigungseinrichtung 5 liegt die Drehzahl der Siebeinrichtung 7 insbesondere im Bereich von 50 bis 250 1/min, bevorzugt im Bereich von 50 bis 200 1/min, besonders bevorzugt im Bereich von 100 bis 150 1/min. Die Frequenz der Oszillationsbewegung des Siebmantels 8 bzw. der Umfangssegmente 17 liegt insbesondere im Bereich von 1 bis 30 Hz, bevorzugt im Bereich von 1 bis 15 Hz, besonders bevorzugt im Bereich von 5 bis 10 Hz. Die Drehzahl der Umlenkeinrichtung 22 wird insbesondere auf einen Wert im Bereich von 100 bis 300 1/min, bevorzugt auf einen Wert im Bereich von 100 bis 250 1/min, besonders bevorzugt auf einen Wert im Bereich von 150 bis 200 1/min, eingestellt. Insbesondere ist die Drehzahl der Umlenkeinrichtung 22 größer als die Drehzahl der Siebeinrichtung 7 bzw. des Siebmantels 8. Das Gebläse 21 ist insbesondere so eingestellt, dass die Drehzahl des Laufrads des Gebläses im Bereich von 150 bis 350 1/min, bevorzugt im Bereich von 200 bis 350 1/min, besonders bevorzugt im Bereich von 250 bis 300 1/min, liegt. Die Strömungsgeschwindigkeit des Gebläses liegt insbesondere im Bereich von 0,5 bis 2,5 m/s, bevorzugt im Bereich von 0,5 bis 2,0 m/s, besonders bevorzugt im Bereich von 1,0 bis 1,5 m/s.

### Bezugszeichenliste

- 1: Mähdrescher
- 2: Feldbestand
- 3: Einzugsanordnung
- 4: Drescheinrichtung
- 5: Reinigungseinrichtung
- 6: Drehachse
- 7: Siebeinrichtung
- 8: Siebmantel
- 9: Pfeil für Oszillationsbewegung Siebmantel
- 9': Pfeil für Oszillationsbewegung Umfangssegmente
- 10: Pfeil für Drehbewegung Siebmantel
- 11: Vorsatzanordnung
- 12: Schneidwerk
- 13: Schrägförderer
- 14: Trenneinrichtung
- 15: Kornelevator
- 16: Korntank
- 17: Umfangssegmente
- 18: Schwenkachsen
- 19: Boden
- 20: Zuführeinrichtung
- 21: Gebläse
- 21a: Luftstrom
- 22: Umlenkeinrichtung
- 23: Förderkanal
- 24: Förderschnecke
- 25: Pfeil Drehbewegung Förderschnecke
- 26: Steuereinrichtung
- G: Schwerkraftrichtung
- EG: Zu entmischendes Erntegut
- K: Anteil Korn
- NKB: Anteil Nichtkornbestandteile

## Patentansprüche

1. Mähdrescher mit einer Einzugsanordnung (3) zum Aufnehmen von Erntegut aus einem Feldbestand (2), mit einer Drescheinrichtung (4) zum Entkörnen des Ernteguts und dadurch Erzeugen eines ersten, überwiegend Korn enthaltenden Erntegutanteils und eines zweiten, überwiegend Stroh enthaltenden Erntegutanteils und mit einer der Drescheinrichtung (4) nachgelagerten Reinigungseinrichtung (5) zum Entmischen des Ernteguts und dadurch Trennen des Korns von Nichtkornbestandteilen, wobei die Reinigungseinrichtung (5) eine um eine Drehachse (6) rotierbare Siebeinrichtung (7) mit einem zumindest abschnittsweise siebförmigen Siebmantel (8), der sich in einer Umfangsrichtung um die Drehachse (6) erstreckt, aufweist, wobei die Entmischung durch Überlagerung einer Drehbewegung und einer Oszillationsbewegung des Siebmantels (8) derart erfolgt, dass die Oszillationsbewegung quer zur Drehachse (6) der Siebeinrichtung (7) gerichtet ist, wobei die Drehachse (6) der Siebeinrichtung (7) in Schwerkraftrichtung (G) oder in Schwerkraftrichtung (G) geneigt verläuft und **dadurch gekennzeichnet, dass** der Siebmantel (8) zumindest abschnittsweise im Wesentlichen konusförmig, kegelstumpfförmig, pyramidenförmig oder pyramidenstumpfförmig ist, wobei er sich zu seinem unteren Ende hin verjüngt.

2. Mähdrescher nach Anspruch 1, **dadurch gekennzeichnet, dass** die Oszillationsbewegung orthogonal oder in einem Winkel von ungleich 90° zur Drehachse (6) gerichtet ist.

3. Mähdrescher nach einem der vorhergehenden Ansprüche, **dadurch gekennzeichnet, dass** die Drehachse (6) der Siebeinrichtung (7) in einem Winkel im Bereich von 30° bis 60° zur Schwerkraftrichtung (G) geneigt ist.

4. Mähdrescher nach einem der vorhergehenden Ansprüche, **dadurch gekennzeichnet, dass** die radiale Position der Drehachse (6) der Siebeinrichtung (7) bei der Oszillationsbewegung des Siebmantels (8) relativ zur Drescheinrichtung fest ist oder dass sich die radiale Position der Drehachse (6) der Siebeinrichtung (7) entsprechend der Oszillationsbewegung ändert.

5. Mähdrescher nach einem der vorhergehenden Ansprüche, **dadurch gekennzeichnet, dass** der Siebmantel (8) über seinen Umfang verteilt mehrere Umfangssegmente (17) hat, die jeweils eine Oszillationsbewegung quer zur Drehachse (6) der Siebeinrichtung (7) zwischen einer radial äußeren Stellung und einer radial inneren Stellung ausführen können, wobei die Summe der Oszillationsbewegungen der Umfangssegmente (17) die Oszillationsbewegung des Siebmantels (8) bildet.

6. Mähdrescher nach Anspruch 5, **dadurch gekennzeichnet, dass** die Oszillationsbewegungen der Umfangssegmente (17) synchron ausführbar sind.

7. Mähdrescher nach einem der Ansprüche 5 oder 6, **dadurch gekennzeichnet, dass** die Umfangssegmente (17) jeweils um eine dem jeweiligen Umfangssegment (17) zugeordnete Schwenkachse (18) schwenkbar sind.

8. Mähdrescher nach einem der Ansprüche 5 bis 7, **dadurch gekennzeichnet, dass** die Umfangssegmente (17) einzeln austauschbar und/oder einstellbar sind.

9. Mähdrescher nach einem der Ansprüche 5 bis 8, **dadurch gekennzeichnet, dass** der Siebmantel abschnittsweise im Wesentlichen zylinderförmig ist, und/oder, dass die Umfangssegmente (17) in eine Stellung bringbar sind, in der der Siebmantel (8) zumindest abschnittsweise im Wesentlichen zylinderförmig ist.

10. Mähdrescher nach einem der Ansprüche 5-9, **dadurch gekennzeichnet, dass** die Umfangssegmente (17) eine gerade oder gebogene innere Oberfläche haben, und/oder, dass die Umfangssegmente (17) eine im Wesentlichen rechteckige oder trapezförmige innere Oberfläche haben.

11. Mähdrescher nach einem der vorhergehenden Ansprüche, **dadurch gekennzeichnet, dass** die Reinigungseinrichtung (5) eine Zuführeinrichtung (20) zum Zuführen des Ernteguts ins Innere der Siebeinrichtung (7) und/oder ein Gebläse (21) zum Erzeugen eines Luftstroms durch die Siebeinrichtung (7) aufweist.

12. Mähdrescher nach einem der vorhergehenden Ansprüche, **dadurch gekennzeichnet, dass** die Reinigungseinrichtung (5) im Innern der Siebeinrichtung (7) eine Umlenkeinrichtung (22) zum Umlenken und Beschleunigen des in die Siebeinrichtung (7) eingeleiteten Ernteguts in radialer Richtung aufweist.

13. Mähdrescher nach einem der Ansprüche 11 und 12, **dadurch gekennzeichnet, dass** die Zuführeinrichtung (20), das Gebläse (21) und/oder die Umlenkeinrichtung (22) derart zur Siebeinrichtung (7) angeordnet ist/sind, dass das Erntegut zunächst axial in Richtung des unteren Endes der Siebeinrichtung (7) eingeleitet wird, dann im Bereich des unteren Endes der Siebeinrichtung (7) radial nach außen umgelenkt wird, dann zumindest ein Teil des Ernteguts axial und/oder parallel zur inneren Oberfläche des Siebmantels (8) vom unteren Ende der Siebeinrichtung (7) weggeleitet wird, wobei schließlich das Korn durch den Siebmantel (8) radial nach außen gelangt und die Nichtkornbestandteile am oberen Ende der Siebeinrichtung (7) aus dieser abgeleitet werden.

14. Mähdrescher nach einem der vorhergehenden Ansprüche, **dadurch gekennzeichnet, dass** der Siebmantel (8)
- eine axiale Höhe im Bereich von 0,70 bis 1,30 m hat und/oder
- einen maximalen Innendurchmesser am unteren Ende der Siebeinrichtung (7) im Bereich von 0,50 bis 1,10 m hat und/oder
- einen maximalen Innendurchmesser am oberen Ende der Siebeinheit im Bereich von 1,40 bis 2,00 m hat und/oder
- eine Siebfläche im Bereich von 1 bis 20 m² hat und/oder
- eine Sieblochung mit einem Durchmesser im Bereich von 5 bis 30 mm hat und/oder
- eine Sieblochung mit einer Teilung im Bereich von 5 bis 30 mm hat.

15. Mähdrescher nach einem der Ansprüche 5-10, **dadurch gekennzeichnet, dass** die Umfangssegmente (17) derart gelagert sind,
- dass der Schwenkwinkel der Umfangssegmente (17) bei der Oszillationsbewegung im Bereich von 1 bis 15° liegt und/oder
- dass der Schwenkweg des schwenkachsenfernen Endes der Umfangssegmente (17) bei der Oszillationsbewegung im Bereich von 10 bis 200 mm liegt.

16. Mähdrescher nach einem der Ansprüche 5-12 und 15, **dadurch gekennzeichnet, dass** die Reinigungseinrichtung (5) eine Steuereinrichtung (26) aufweist, die konfiguriert ist,
- die Drehzahl der Siebeinrichtung (7) auf 50 bis 250 1/min einzustellen und/oder
- die Frequenz der Oszillationsbewegung des Siebmantels (8) und/oder der Umfangssegmente (17) auf 1 bis 30 Hz einzustellen und/oder
- die Drehzahl der Umlenkeinrichtung (22) auf 100 bis 300 1/min einzustellen und/oder
- die Drehzahl des Laufrads des Gebläses (21) auf 150 bis 350 1/min einzustellen und/oder
- die Strömungsgeschwindigkeit des Gebläses (21) auf 0,5 bis 2,5 m/s einzustellen.

## Claims

1. A combine harvester comprising an intake arrangement (3) for picking up crop material from a field stand (2), a threshing device (4) for degraining the crop material and thereby producing a first predominantly grain-containing crop material portion and a second predominantly strawcontaining crop material proportion and a cleaning device (5) downstream of the threshing device (4) for separating the mixture of crop material and thereby separating the grain from non-grain constituents, wherein the cleaning device (5) has a sieve device (7) which is rotatable about an axis of rotation (6) and has an at least portion-wise sieve-form sieve casing (8) extending in a peripheral direction around the axis of rotation (6), wherein separation of the mixture of crop material is effected by superimposition of a rotary movement and an oscillatory movement of the sieve casing (8) in such a way that the oscillatory movement is directed transversely relative to the axis of rotation (6) of the sieve device (7), wherein the axis of rotation (6) of the sieve device (7) extends in the direction (G) of the force of gravity or inclinedly in the direction (G) of the force of gravity, **characterised in that** the sieve casing (8) is at least portion-wise substantially conical, frustoconical, pyramidal or frustopyramidal, narrowing towards its lower end.

2. A combine harvester according to claim 1 **characterised in that** the oscillatory movement is directed orthogonally or at an angle different from 90° relative to the axis of rotation (6).

3. A combine harvester according to one of the preceding claims **characterised in that** the axis of rotation (6) of the sieve device (7) is inclined at an angle in the range of 30° to 60° relative to the direction (G) of the force of gravity.

4. A combine harvester according to one of the preceding claims **characterised in that** the radial position of the axis of rotation (6) of the sieve device (7) is fixed in the oscillatory movement of the sieve casing (8) relative to the threshing device or that the radial position of the axis of rotation (6) of the sieve device (7) changes corresponding to the oscillatory movement.

5. A combine harvester according to one of the preceding claims **characterised in that** the sieve casing (8) has a plurality of peripheral segments (17) distributed over its periphery, which can respectively perform an oscillatory movement transversely relative to the axis of rotation (6) of the sieve device (7) between a radially outer position and a radially inner position, wherein the sum of the oscillatory movements of the peripheral segments (17) forms the oscillatory movement of the sieve casing (8).

6. A combine harvester according to claim 5 **characterised in that** the oscillatory movements of the peripheral segments (17) can be performed synchronously.

7. A combine harvester according to one of claims 5 and 6 **characterised in that** the peripheral segments (17) are respectively pivotable about a pivot axis (18) associated with the respective peripheral segment (17).

8. A combine harvester according to one of claims 5 to 7 **characterised in that** the peripheral segments (17) are individually replaceable and/or adjustable.

9. A combine harvester according to one of claims 5 to 8 **characterised in that** the sieve casing is portion-wise substantially cylindrical and/or the peripheral segments (17) can be moved into a position in which the sieve casing (8) is at least portion-wise substantially cylindrical.

10. A combine harvester according to one of claims 5 to 9 **characterised in that** the peripheral segments (17) have a straight or curved inner surface and/or the peripheral segments (17) have a substantially rectangular or trapezoidal inner surface.

11. A combine harvester according to one of the preceding claims **characterised in that** the cleaning device (5) has a feed device (20) for feeding the crop material into the interior of the sieve device (7) and/or a fan (21) for producing an air flow through the sieve device (7).

12. A combine harvester according to one of the preceding claims **characterised in that** in the interior of the sieve device (7) the cleaning device (5) has a deflection device (22) for deflecting and accelerating the crop material introduced into the sieve device (7) in the radial direction.

13. A combine harvester according to one of claims 11 and 12 **characterised in that** the feed device (20), the fan (21) and/or the deflection device (22) is/are arranged in relation to the sieve device (7) in such a way that the crop material is initially introduced axially in the direction of the lower end of the sieve device (7), is then deflected radially outwardly in the region of the lower end of the sieve device (7), then at least a part of the crop material is carried away axially and/or parallel to the inner surface of the sieve casing (8) from the lower end of the sieve device (7), wherein finally the grain passes radially outwardly through the sieve casing (8) and the non-grain constituents are discharged from the sieve device (7) at the upper end thereof.

14. A combine harvester according to one of the preceding claims **characterised in that** the sieve casing (8) has
- an axial height in the range of 0.70 to 1.30 m, and/or
- a maximum inside diameter at the lower end of the sieve device (7) in the range of 0.50 to 1.10 m, and/or
- a maximum inside diameter at the upper end of the sieve unit in the range of 1.40 to 2.00 m, and/or
- a sieve area in the range of 1 to 20 m², and/or
- a sieve hole arrangement of a diameter in the range of 5 to 30 mm, and/or
- a sieve hole arrangement with a division in the range of 5 to 30 mm.

15. A combine harvester according to one of claims 5 to 10 **characterised in that** the peripheral segments (17) are mounted in such a way that
- the pivotal angle of the peripheral segments (17) is in the range of 1 to 15° in the oscillatory movement, and/or
- the pivotal travel of the end remote from the pivot axis of the peripheral segments (17) is in the range of 10 to 200 mm in the oscillatory movement.

16. A combine harvester according to one of claims 5 to 12 and 15 **characterised in that** the cleaning device (5) has a control device (26) which is configured
- to adjust the rotary speed of the sieve device (7) to 50 to 250 l/min, and/or
- to adjust the frequency of the oscillatory movement of the sieve casing (8) and/or the peripheral segments (17) to 1 to 30 Hz, and/or
- to adjust the rotary speed of the deflection device (22) to 100 to l/min, and/or
- to adjust the rotary speed of the impeller of the fan (21) to 150 to l/min, and/or
- to adjust the flow speed of the fan (21) to 0.5 to 2.5 m/s.

## Revendications

1. Moissonneuse-batteuse comprenant un agencement d'alimentation (3) pour ramasser du produit de récolte à partir d'une culture en champ (2), comprenant un équipement de battage (4) pour égrener le produit récolté et ainsi produire une première fraction de produit récolté contenant principalement du grain et une seconde fraction de produit récolté contenant principalement de la paille, et comprenant un équipement de nettoyage (5) disposé en aval de l'équipement de battage (4) pour dissocier le produit récolté et ainsi séparer le grain des composants non-grain, l'équipement de nettoyage (5) comportant un dispositif de tamisage (7) tournant autour d'un axe de rotation (6) avec une surface enveloppante de tamisage au moins par endroits en forme de tamis (8), laquelle s'étend dans une direction circonférentielle autour de l'axe de rotation (6), la dissociation s'effectuant par superposition d'un mouvement tournant et d'un mouvement oscillant de la surface enveloppante de tamisage (8), de façon que le mouvement oscillant soit orienté transversalement à l'axe de rotation (6) de l'équipement de tamisage (7), l'axe de rotation (6) de l'équipement de tamisage (7) s'étendant dans le sens de gravité (G) ou de manière oblique par rapport au sens de gravité (G), **caractérisée en ce que** la surface enveloppante de tamisage (8) est au moins par endroits sensiblement conique, tronconique, pyramidale ou en forme de pyramide tronquée, en se rétrécissant vers son extrémité inférieure.

2. Moissonneuse-batteuse selon la revendication 1, **caractérisée en ce que** le mouvement oscillant est orienté orthogonalement ou selon un angle différent de 90° par rapport à l'axe de rotation (6).

3. Moissonneuse-batteuse selon une des revendications précédentes, **caractérisée en ce que** l'axe de rotation (6) de l'équipement de tamisage (7) est incliné selon un angle situé dans la plage de 30° à 60° par rapport au sens de gravité (G).

4. Moissonneuse-batteuse selon une des revendications précédentes, **caractérisée en ce que** la position radiale de l'axe de rotation (6) de l'équipement de tamisage (7) est fixe par rapport à l'équipement de battage lors du mouvement oscillant de la surface enveloppante de tamisage (8) ou **en ce que** la position radiale de l'axe de rotation (6) de l'équipement de tamisage (7) varie selon le mouvement oscillant.

5. Moissonneuse-batteuse selon une des revendications précédentes, **caractérisée en ce que** la surface enveloppante de tamisage (8) possède plusieurs segments circonférentiels (17) qui sont répartis sur sa périphérie et qui peuvent effectuer chacun un mouvement oscillant transversalement à l'axe de rotation (6) de l'équipement de tamisage (7) entre une position radialement extérieure et une position radialement intérieure, la somme des mouvements oscillants des segments circonférentiels (17) formant le mouvement oscillant de la surface enveloppante de tamisage (8).

6. Moissonneuse-batteuse selon la revendication 5, **caractérisée en ce que** les mouvements oscillants des segments circonférentiels (17) peuvent être effectués de manière synchrone.

7. Moissonneuse-batteuse selon une des revendications 5 ou 6, **caractérisée en ce que** les segments circonférentiels (17) peuvent chacun pivoter autour d'un axe de pivotement (18) associé au segment circonférentiel respectif (17).

8. Moissonneuse-batteuse selon une des revendications 5 à 7, **caractérisée en ce que** les segments circonférentiels (17) sont échangeables et/ou réglables individuellement.

9. Moissonneuse-batteuse selon une des revendications 5 à 8, **caractérisée en ce que** la surface enveloppante de tamisage est par endroits sensiblement cylindrique, et/ou **en ce que** les segments circonférentiels (17) peuvent être amenés dans une position dans laquelle la surface enveloppante de tamisage (8) est au moins par endroits sensiblement cylindrique.

10. Moissonneuse-batteuse selon une des revendications 5 à 9, **caractérisée en ce que** les segments circonférentiels (17) possèdent une surface supérieure intérieure rectiligne ou courbe, et/ou **en ce que** les segments circonférentiels (17) possèdent une surface supérieure intérieure sensiblement rectangulaire ou trapézoïdale.

11. Moissonneuse-batteuse selon une des revendications précédentes, **caractérisée en ce que** l'équipement de nettoyage (5) comporte un équipement d'amenée (20) pour amener le produit récolté à l'intérieur de l'équipement de tamisage (7) et/ou un ventilateur (21) pour produire un courant d'air à travers l'équipement de tamisage (7).

12. Moissonneuse-batteuse selon une des revendications précédentes, **caractérisée en ce que**, à l'intérieur de l'équipement de tamisage (7), l'équipement de nettoyage (5) comporte dans la direction radiale un équipement de déflexion (22) pour défléchir et accélérer le produit récolté introduit dans l'équipement de tamisage (7).

13. Moissonneuse-batteuse selon une des revendications 11 et 12, **caractérisée en ce que** l'équipement d'amenée (20), le ventilateur (21) et/ou l'équipement de déflexion (22) est/sont disposés par rapport à l'équipement de tamisage (7) de façon que le produit récolté soit d'abord introduit axialement en direction de l'extrémité inférieure de l'équipement de tamisage (7), puis, dans la zone de l'extrémité inférieure de l'équipement de tamisage (7), soit défléchi radialement vers l'extérieur, puis qu'au moins une partie du produit récolté soit évacuée de l'extrémité inférieure de l'équipement de tamisage (7) axialement et/ou parallèlement à la surface supérieure intérieure de la surface enveloppante de tamisage (8), le grain traversant enfin la surface enveloppante de tamisage (8) radialement vers l'extérieur, et les composants non-grain étant détournés de l'équipement de tamisage (7) à l'extrémité supérieure de celui-ci.

14. Moissonneuse-batteuse selon une des revendications précédentes, **caractérisée en ce que** la surface enveloppante de tamisage (8)
- a une hauteur axiale située dans la plage de 0,70 à 1,30 m et/ou
- a un diamètre intérieur maximal, à l'extrémité inférieure de l'équipement de tamisage (7), situé dans la plage de 0,50 à 1,10 m et/ou
- a un diamètre intérieur maximal, à l'extrémité supérieure de l'unité de tamisage, situé dans la plage de 1,40 à 2,00 m et/ou
- a une surface de tamisage située dans la plage de 1 à 20 m² et/ou
- a une perforation de tamisage d'un diamètre situé dans la plage de 5 à 30 mm et/ou
- a une perforation de tamisage avec un écartement de 5 à 30 mm.

15. Moissonneuse-batteuse selon une des revendications 5 à 10, **caractérisée en ce que** les segments circonférentiels (17) sont montés de façon
- que, lors du mouvement oscillant, l'angle de pivotement des segments circonférentiels (17) soit situé dans la plage de 1 à 15° et/ou
- que, lors du mouvement oscillant, la course de pivotement de l'extrémité des segments circonférentiels (17) éloignée de l'axe de pivotement soit située dans la plage de 10 à 200 mm.

16. Moissonneuse-batteuse selon une des revendications 5 à 12 et 15, **caractérisée en ce que** l'équipement de nettoyage (5) comporte un équipement de commande (26) qui est configuré pour
- régler la vitesse de rotation de l'équipement de tamisage (7) à 50 à 250 tr/min et/ou
- régler la fréquence du mouvement oscillant de la surface enveloppante de tamisage (8) et/ou des segments circonférentiels (17) à 1 à 30 Hz et/ou
- régler la vitesse de rotation de l'équipement de déflexion (22) à 100 à 300 tr/min et/ou
- régler la vitesse de rotation du rotor du ventilateur (21) à 150 à 350 tr/min et/ou
- régler la vitesse de flux du ventilateur (21) à 0,5 à 2,5 m/s.
